# DEMANDE DE BREVET EUROPEEN

(11) **EP 1 843 442 A2**
(43) Date de publication de la demande: **10.10.2007**
(21) Numéro de dépôt: 07300893.0
(22) Date de dépôt: 22.03.2007
(51) Int. Cl.: H02G 15/18, H02G 15/188, H02G 15/068

(54) **Adapteur de câble, tubulaire pour la jonction ou la terminaison d'un câble moyenne tension.**

(30) Priorité: 05.04.2006 FR 0651208
(71) Demandeur: Nexans, 75008 Paris (FR)
(72) Inventeur: Cardinaels, Josef, B-9230, Wetteren (BE); de Ridder, Eduard, B-9310, Herdersem-Aalst (BE)
(74) Mandataire: Lenne, Laurence

(57) **Abrégé**

L'invention concerne un élément rétractable à froid pour jonction ou terminaison de câbles électriques, comprenant un ensemble de couches isolantes ou conductrices, un manchon protecteur externe (5) et un élément de support (3) permettant de maintenir cet ensemble de couches dans un état radialement expansé, cet élément de support pouvant être retiré de cet ensemble pour assurer la rétractation des couches sur le câble ou les câbles. Selon l'invention, l'élément comporte une feuille métallisée (6) disposée entre ledit ensemble de couches et ledit manchon protecteur et une couche gonflante absorbante de l'humidité (7) disposée entre ledit ensemble de couches et ladite feuille métallisée (6).

## Description

L'invention concerne un adaptateur de câble, tubulaire pour la jonction ou la terminaison d'un câble moyenne tension.

Lorsque des câbles isolés au papier doivent être connectés dans une jonction ou une terminaison, il est connu d'appliquer une couche barrière au-dessus des couches isolantes de papier au niveau des accessoires de jonction ou de terminaison. Cette couche protège le câble et procure une interface de type câble sec sur laquelle des accessoires destinés à des câbles secs sont montés.

Un adaptateur pouvant être installé en une seule étape est décrit dans le document de brevet EP 1 220 408.

Cet adaptateur rétractable à froid comprend un manchon isolant de caoutchouc de silicone, un élément de métal conducteur constitué d'une chaussette de fils de cuivre, une couche semi-conductrice de caoutchouc de silicone semi-conducteur située entre le manchon isolant et l'élément de métal conducteur et un manchon protecteur externe recouvrant partiellement l'élément de métal conducteur. Un élément de support permet de maintenir cet ensemble de couches dans un état radialement expansé, cet élément de support pouvant être retiré de cet ensemble pour assurer la rétractation des couches sur le câble ou les câbles.

Une fois l'adaptateur monté, des accessoires de jonction ou de terminaison viennent enfermer les extrémités des couches précisées ci-dessus, en venant recouvrir les extrémités du manchon protecteur externe.

Le problème que pose un tel adaptateur est que les couches de caoutchouc ne sont pas complètement imperméables à l'humidité. Lorsque la jonction ou la terminaison est installée dans le sol et exposée à l'eau, l'humidité pénètre lentement au travers de ces couches et est finalement absorbée par le papier isolant du câble ou des câbles, ce qui peut entraîner un défaut électrique.

La déposante a donc envisagé d'ajouter une feuille métallisée fine et flexible compatible avec la rétractation à froid de l'adaptateur, entre l'élément de métal conducteur et le manchon protecteur externe, sur une longueur supérieure à celle du manchon protecteur externe, cette feuille débordant à chacune des extrémité de ce manchon.

Cependant, il s'avère que, même avec une feuille métallisée, un tel produit n'est pas parfaitement étanche car, aux bords de la feuille, il reste une zone où l'humidité peut infiltrer.

L'invention résout ce problème d'humidité dommageable au bon fonctionnement électrique et, pour ce faire, elle propose un élément rétractable à froid pour jonction ou terminaison de câbles électriques, comprenant un ensemble de couches isolantes ou conductrices, un manchon protecteur externe et un élément de support permettant de maintenir cet ensemble de couches dans un état radialement expansé, cet élément de support pouvant être retiré de cet ensemble pour assurer la rétractation des couches sur le câble ou les câbles, caractérisé en ce qu'il comporte une feuille métallisée disposée entre ledit ensemble de couches et ledit manchon protecteur et une couche gonflante absorbante de l'humidité disposée entre ledit ensemble de couches et ladite feuille métallisée.

Cette couche gonflante assure la capture de l'humidité rentrant dans la jonction ou la terminaison et l'empêche de pénétrer jusqu'au(x) câble(s).

De préférence, ladite feuille métallisée est de longueur telle qu'elle déborde à chaque extrémité du dit manchon protecteur externe.

Et avantageusement, ladite couche gonflante est de longueur inférieure à la longueur de ladite feuille métallisée et est totalement recouverte par cette dernière.

Ledit ensemble de couches peut comprendre un manchon isolant, un élément de métal conducteur et une couche semi-conductrice située entre le manchon isolant et l'élément de métal conducteur.

De préférence, ladite couche gonflante est constituée d'un ruban de fibres encapsulant des particules de gel gonflant.

Lesdites fibres peuvent être en polyester et lesdites particules en polyacrylate.

L'invention est décrite ci-après plus en détail à l'aide d'une figure illustrant un mode de réalisation préféré de l'invention, destiné à la réalisation d'une terminaison de câble.

Sur cette figure, est représenté en coupe longitudinale partielle et largement tronquée en longueur, un adaptateur rétractable à froid pour jonction ou terminaison de câbles électriques isolés par du papier, comprenant un ensemble de couches isolantes ou conductrices et un manchon protecteur externe 5.

Un élément de support 3 tubulaire permet de maintenir cet ensemble de couches dans un état radialement expansé, cet élément de support pouvant être retiré de cet ensemble pour assurer la rétractation des couches sur le câble ou les câbles de la terminaison ou de la jonction.

L'ensemble de couches comprend un manchon isolant 1 avantageusement de caoutchouc de silicone, un élément de métal conducteur 4 constitué de préférence d'une chaussette de fils de cuivre et une couche semi-conductrice 2 avantageusement de caoutchouc de silicone semi-conducteur située entre le manchon isolant 3 et l'élément de métal conducteur 4.

Pour assurer une étanchéité à l'humidité, une feuille métallisée 6 est disposée entre l'élément de métal conducteur et le manchon protecteur externe, sur une longueur supérieure à celle du manchon protecteur externe 5, cette feuille débordant à chacune des extrémité de ce manchon 5.

Selon l'invention, une couche gonflante absorbante de l'humidité 7 est disposée entre l'ensemble de couches et la feuille métallisée 6. Cette couche 7 est de longueur inférieure à la longueur de la feuille métallisée et est totalement recouverte par cette dernière.

La feuille métallisée 6 et la couche gonflante 7 peuvent être formées d'une bande enroulée l'une après l'autre autour de l'ensemble de couches.

De préférence, la couche gonflante 7 est constituée d'un ruban de fibres encapsulant des particules de gel gonflant. Il peut être utilisé des fibres de polyester et des particules de polyacrylate.

A titre d'exemple, il peut être utilisé une bande de blocage de l'humidité connue sous la dénomination commerciale « GTI 1240 » de la société GECA-TAPES.

Pour l'installation sur le câble, l'adaptateur est glissé sur ce câble et par retrait d'un tube de l'élément support 3, tout l'assemblage de couches se rétracte contre le câble, de la façon déjà décrite dans le document de brevet EP 1 220 408. A chaque extrémité du manchon protecteur 5, l'élément de métal conducteur 4 est apparent afin de permettre de réaliser des contacts électriques.

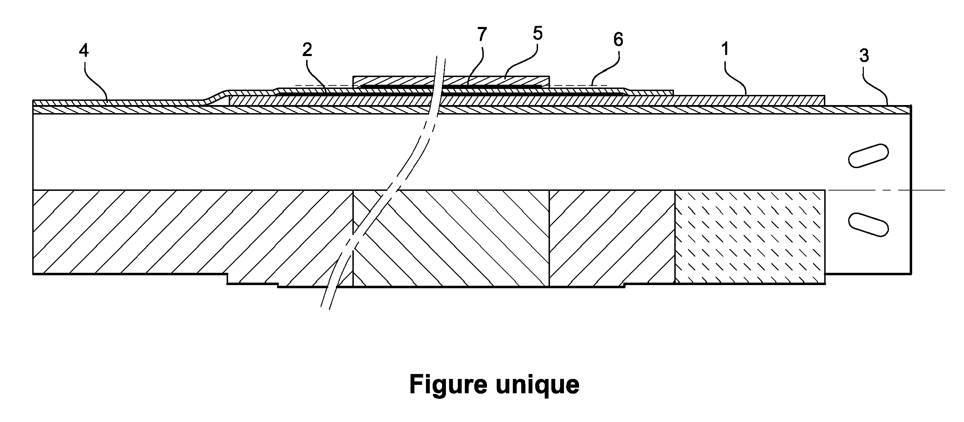

Plus précisément, lors de l'installation, l'adaptateur étant vu dans le sens de la figure, l'extrémité libre gauche de l'élément de métal conducteur 4 et la feuille métallisée 6 sont repliés au-dessus du manchon protecteur 5. L'élément de support 3 est alors translaté au-dessus du câble, de sorte que l'extrémité gauche du manchon isolant 1 soit positionnée aussi près que possible de l'endroit où le conducteur ou les conducteurs sont dénudés de leur gaine commune, endroit couramment appelé chignon du câble. L'élément de support 3 est alors tiré vers la droite sous le manchon isolant 1 au moyen d'un crochet adapté dans les orifices prévus à son extrémité de droite. Par l'enlèvement de cet élément de support, l'ensemble de couches se rétracte sur le conducteur du câble et transforme ce conducteur isolé au papier en câble isolé par polymère, appelé câble sec.

L'extrémité gauche de l'élément de métal conducteur 4 et l'extrémité gauche de la feuille métallisée 6 sont alors dépliés, l'élément de métal conducteur 4 venant au-dessus de l'écran de plomb de façon à être amené en contact électrique avec ce dernier, assurant ainsi la continuité de blindage du câble.

Dans le cas d'un câble tri-phasé, les éléments de métal conducteurs 4 sont interconnectés au blindage métallique du câble et un gant de trifurcation est installé au-dessus de la zone du chignon. Les doigts de ce gant recouvrent partiellement l'extrémité gauche du manchon protecteur externe 5.

Sur le côté droit, l'extrémité libre des éléments de métal conducteur 4 et celle de la feuille métallisée 6 sont alors repliées au-dessus de l'extrémité droite du manchon protecteur externe. Ainsi, l'extrémité du manchon isolant 1 et celle de la couche semi-conductrice 2 sont à nu sur une certaine longueur.

De cette façon, un câble tri-phasé isolé au papier imbibé d'huile devient par quelques étapes simples, un câble isolé au polymère à phase blindée individuellement sur lequel des accessoires standards destiné à des câbles secs peuvent être installés.

La partie centrale non recouverte par ces accessoires est efficacement protégée de l'humidité par la feuille métallisée 6 et la couche gonflante 7 situées sous le manchon protecteur externe 5.

Bien que le mode de réalisation décrit plus haut est relatif à la réalisation d'une terminaison de câble, il va de soi que l'invention s'applique également à la réalisation de jonction de câbles.

## Revendications

1. Elément rétractable à froid pour jonction ou terminaison de câbles électriques, comprenant un ensemble de couches isolantes ou conductrices, un manchon protecteur externe (5) et un élément de support (3) permettant de maintenir cet ensemble de couches dans un état radialement expansé, cet élément de support pouvant être retiré de cet ensemble pour assurer la rétractation des couches sur le câble ou les câbles, **caractérisé en ce qu'**il comporte une feuille métallisée (6) disposée entre ledit ensemble de couches et ledit manchon protecteur et une couche gonflante absorbante de l'humidité (7) disposée entre ledit ensemble de couches et ladite feuille métallisée (6).

2. Elément selon la revendication 1, **caractérisé en ce que** ladite feuille métallisée (6) est de longueur telle qu'elle déborde à chaque extrémité du dit manchon protecteur externe (5).

3. Elément selon la revendication précédente, **caractérisé en ce que** ladite couche gonflante (7) est de longueur inférieure à la longueur de ladite feuille métallisée et est totalement recouverte par cette dernière.

4. Element selon l'une des revendications 1 à 3, **caractérisé en ce que** ledit ensemble de couches comprend un manchon isolant (1), un élément de métal conducteur (4) et une couche semi-conductrice (2) située entre le manchon isolant (1) et l'élément de métal conducteur (4).

5. Elément selon l'une des revendications précédentes, **caractérisé en ce que** ladite couche gonflante (7) est constituée d'un ruban de fibres encapsulant des particules de gel gonflant.

6. Elément selon la revendication précédente, **caractérisé en ce que** lesdites fibres sont en polyester et lesdites particules en polyacrylate.
